# EUROPÄISCHE PATENTSCHRIFT

(11) **EP 3 216 314 B1**
(45) Veröffentlichungstag und Bekanntmachung des Hinweises auf die Patenterteilung: **17.03.2021**
(21) Anmeldenummer: 15790685.0
(22) Anmeldetag: 27.10.2015
(51) Int. Cl.: H05B 6/12, H05B 3/68, F24C 15/10

(54) **KOCHFELDVORRICHTUNG**
COOKTOP DEVICE
DISPOSITIF À TABLE DE CUISSON

(30) Priorität: 03.11.2014 ES 201431611
(43) Veröffentlichungstag der Anmeldung: 13.09.2017
(73) Patentinhaber: BSH Hausgeräte GmbH, 81739 München (DE)
(72) Erfinder: CARMONA MARTINEZ, Manuel, 41019 Sevilla (ES); LLADO PARIS, Juan, 50004 Zaragoza (ES); LLORENTE GIL, Sergio, 50009 Zaragoza (ES); RUIZ GRACIA, Ricardo, 50194 Movera (Zaragoza) (ES); SANCHEZ TABUENCA, Beatriz, 50007 Zaragoza (ES); URDANGARIN GARCIA, Julen, 50010 Zaragoza (ES)
(86) Internationale Anmeldenummer: PCT/IB2015/058265
(87) Internationale Veröffentlichungsnummer: WO 2016/071802

(56) Entgegenhaltungen:
- WO-A1-2008/101766
- FR-A1- 2 669 101
- GB-A- 2 160 969

## Beschreibung

Die Erfindung geht aus von einer Kochfeldvorrichtung nach dem Oberbegriff des Patentanspruchs 1.

Aus der internationalen Patentanmeldung WO 2008/101766 A1 ist bereits eine Kochfeldvorrichtung bekannt, die einen Gelenkarm und eine Aufhängung zu einer Anbindung des Gelenkarms an ein Basisbauteil aufweist. Der Gelenkarm weist zwei oder mehrere Gelenke auf. Folglich weist der Gelenkarm drei oder mehr Armteile auf. Die Kochfeldvorrichtung umfasst vier Heizelemente. Der Gelenkarm trägt alle Heizelemente und bewegt die Heizelemente mit einem karussellartigen Bewegungsmechanismus zu einer Beheizung einer 'gigantischen' Heizzone.

Die Aufgabe der Erfindung besteht insbesondere darin, eine gattungsgemäße Vorrichtung mit verbesserten Eigenschaften hinsichtlich geringer Kosten und/oder einer hohen Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit einem Gelenkarm, der einen ersten Armteil und einen zweiten Armteil aufweist, mit einem Gelenk, das dazu vorgesehen ist, den zweiten Armteil relativ zu dem ersten Armteil beweglich zu lagern, und mit einer Aufhängung zu einer Anbindung des ersten Armteils an ein Basisbauteil.

Es wird vorgeschlagen, dass der Gelenkarm dazu vorgesehen ist, genau ein insbesondere einziges Heizelement zu tragen. Unter einer "Kochfeldvorrichtung" soll insbesondere zumindest ein Teil, insbesondere eine Unterbaugruppe, eines Kochfelds, insbesondere eines Induktionskochfelds, verstanden werden. Insbesondere kann die Kochfeldvorrichtung auch das gesamte Kochfeld, insbesondere das gesamte Induktionskochfeld, umfassen. Unter einem "Gelenkarm" soll insbesondere eine Einheit verstanden werden, die insbesondere eine mechanische Verbindung zwischen dem Basisbauteil und dem Heizelement herstellt und die vorteilhaft genau zwei Armteile aufweist, jedoch insbesondere auch eine größere Anzahl an Armteilen aufweisen könnte. Unter einem "Armteil" soll insbesondere ein Element des Gelenkarms verstanden werden, das insbesondere wenigstens im Wesentlichen steif und/oder starr ausgebildet ist und das vorteilhaft frei von Gelenken ist. Ein Armteil der Armteile des Gelenkarms stellt insbesondere eine mechanische Verbindung zwischen dem Gelenk und einem Bauteil, wie beispielsweise dem Heizelement, und/oder zwischen zwei einander nächstgelegenen Gelenken und/oder zwischen dem Gelenk und der Aufhängung her. Unter einem "wenigstens im Wesentlichen" steifen und/oder starren Element soll insbesondere ein Element verstanden werden, das bei einer Temperatur von 20°C ein Schubmodul von mindestens 0,1 GPa, insbesondere von mindestens 1 GPa, vorteilhaft von mindestens 3 GPa, besonders vorteilhaft von mindestens 5 GPa, vorzugsweise von mindestens 10 GPa, bevorzugt von mindestens 15 GPa und besonders bevorzugt von mindestens 20 GPa aufweist und/oder das ein Elastizitätsmodul von mindestens 1 GPa, insbesondere von mindestens 5 GPa, vorteilhaft von mindestens 10 GPa, besonders vorteilhaft von mindestens 20 GPa, vorzugsweise von mindestens 40 GPa, bevorzugt von mindestens 60 GPa und besonders bevorzugt von mindestens 80 GPa aufweist. Unter einem "Gelenk" soll insbesondere eine Einheit verstanden werden, die insbesondere eine mechanische Verbindung zwischen einem ersten Objekt und einem zweiten Objekt herstellt und die insbesondere das zweite Objekt beweglich, besonders vorteilhaft schwenkbar um wenigstens eine Schwenkachse und/oder Rotationsachse relativ zu dem ersten Objekt lagert. Das Gelenk ist vorteilhaft dazu vorgesehen, insbesondere eine Ausrichtung und vorteilhaft eine Haupterstreckungsrichtung des zweiten Armteils relativ zu dem ersten Armteil zu verändern. Beispielsweise könnte das Gelenk als ein Kugelgelenk und/oder als ein Rotationsgelenk und/oder als ein Schwenklager ausgebildet sein. Unter einer "Haupterstreckungsrichtung" eines Objekts soll insbesondere eine Richtung verstanden werden, die parallel zu einer längsten Seite eines das Objekt gerade noch umschließenden gedachten Quaders verstanden werden. Im Fall von wenigstens im Wesentlichen parallel zueinander ausgerichteten und insbesondere von wenigstens im Wesentlichen in dieselbe Richtung weisenden Haupterstreckungsrichtungen der Armteile des Gelenkarms weist der Gelenkarm vorteilhaft eine maximale Erstreckung, insbesondere eine maximale Längserstreckung, auf. Insbesondere weist ein Armteil der Armteile eine Erstreckung, insbesondere eine Längserstreckung auf, die vorteilhaft mindestens 5 % und insbesondere maximal 95 % eines Werts der maximalen Erstreckung des Gelenkarms entspricht. Unter einer "Aufhängung" soll insbesondere eine Einheit verstanden werden, die dazu vorgesehen ist, den Gelenkarm insbesondere an dem Basisbauteil zu befestigen und vorteilhaft den Gelenkarm beweglich, insbesondere schwenkbar um wenigstens eine Drehachse, relativ zu dem Basisbauteil zu lagern. Unter einem "Basisbauteil" soll insbesondere ein Bauteil verstanden werden, das eine Masse von mindestens 200 %, insbesondere von mindestens 300 %, vorteilhaft von mindestens 400 % und vorzugsweise von mindestens 500 % einer gemeinsamen Masse des Gelenkarms und des Heizelements aufweist und/oder das vorteilhaft dazu vorgesehen ist, insbesondere von dem Gelenkarm kommende einwirkende Kräfte aufzunehmen und diese Kräfte an eine weitere Einheit weiterzuleiten, wie beispielsweise einen Untergrund und/oder eine Arbeitsplatte und/oder eine Wand und/oder ein Gehäuse. Unter einem "Heizelement" soll in diesem Zusammenhang insbesondere ein Element verstanden werden, welches dazu vorgesehen ist, Energie, vorzugsweise elektrische Energie, in Wärme umzuwandeln und insbesondere zumindest einem Gargeschirr der zumindest zwei Gargeschirre zuzuführen. Vorteilhaft ist das Heizelement insbesondere als Induktionsheizelement ausgebildet und dabei vorzugsweise dazu vorgesehen, ein elektromagnetisches Wechselfeld insbesondere mit einer Frequenz zwischen 20 kHz und 100 kHz zu erzeugen, das insbesondere dazu vorgesehen ist, in einem aufgestellten, insbesondere metallischen, vorzugsweise ferromagnetischen, Gargeschirrboden durch Wirbelstrominduktion und/oder Ummagnetisierungseffekte in Wärme umgewandelt zu werden. Insbesondere beträgt in wenigstens einem ersten Betriebszustand ein Wert eines Abstands zu einem weiteren Heizelement, das zu dem genau einen einzigen Heizelement insbesondere nächstgelegen ist, mindestens 5 cm, insbesondere mindestens 7 cm, vorteilhaft mindestens 10 cm, besonders vorteilhaft mindestens 12 cm und vorzugsweise mindestens 15 cm, wobei der Abstand insbesondere zwischen äußeren in dem wenigstens einem ersten Betriebszustand einander zugewandten Begrenzungen der betrachteten Heizelemente gemessen ist. Das genau eine Heizelement ist insbesondere in wenigstens einem montierten Zustand auf genau einem Spulenträger gewickelt und vorteilhaft von dem genau einen Spulenträger getragen, der insbesondere in dem wenigstens einen montierten Zustand seinerseits von dem Gelenkarm getragen ist. Insbesondere weist das genau eine Heizelement eine wenigstens im Wesentlichen ovale und vorteilhaft eine wenigstens im Wesentlichen kreisrunde Gestalt auf. Beispielsweise könnte das genau eine Heizelement insbesondere zumindest zwei Teilheizelemente aufweisen, die vorteilhaft unabhängig voneinander betreibbar und aus verschiedenen Heizleitern gewickelt sein könnten. Hierbei sind die zumindest zwei Teilheizelemente insbesondere zu einer Beheizung einer gemeinsamen Heizzone vorgesehen. Insbesondere sind die zumindest zwei Teilheizelemente relativ zueinander unbeweglich angeordnet. Ein Wert eines Abstands zwischen einander zugewandten äußeren Begrenzungen der zumindest zwei Teilheizelemente könnte beispielsweise maximal 5 cm, insbesondere maximal 4 cm, vorteilhaft maximal 3 cm, besonders vorteilhaft maximal 2 cm und vorzugsweise maximal 1 cm betragen. Die zumindest zwei Teilheizelemente könnten insbesondere konzentrisch relativ zueinander und/oder nebeneinander, wie insbesondere zur Beheizung eines Bräters, angeordnet sein. Alternativ könnte das genau eine Heizelement vorteilhaft genau einen insbesondere einzigen Heizleiter aufweisen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können/kann insbesondere geringe Kosten und/oder eine hohe Flexibilität erreicht werden. Vorteilhaft kann durch eine geringe Tragfähigkeit in Form von genau einem einzigen Heizelement ein Gelenkarm kostengünstig, insbesondere aus kostengünstigem Material, ausgestaltet werden. Insbesondere können durch das genau eine einzige Heizelement Heizzonen flexibler Größe, vorteilhaft auch Heizzonen zu einer Beheizung kleiner Gargeschirre, beheizt werden, wobei insbesondere zu einer Beheizung größerer Heizzonen vorteilhaft eine hohe Frequenz zu einer Bewegung des Heizelements gewählt werden kann. Vorteilhaft kann in einem Vergleich zu einem typischen Matrixkochfeld eine geringe Anzahl an Bauteilen, wie insbesondere an Heizelementen, erzielt werden. In einem Vergleich zu einem Matrixkochfeld kann insbesondere mittels einer geringen Anzahl an Heizelementen eine größere Anzahl an Gargeschirren erhitzt werden, wodurch vorteilhaft eine hohe Effektivität und/oder eine hohe Effizienz ermöglicht werden kann. Insbesondere kann in einem Vergleich zu einem Matrixkochfeld ein Gargeschirr beliebiger Art, wie insbesondere beliebiger Form und/oder beliebiger Größe, erhitzt werden.

Ferner wird vorgeschlagen, dass die Kochfeldvorrichtung das Basisbauteil umfasst, an dem der erste Armteil um einen Winkelbereich von mindestens 90°, insbesondere von mindestens 120°, vorteilhaft von mindestens 150° und vorzugsweise von mindestens 170° rotierbar insbesondere um eine Rotationsachse gelagert ist. Beispielsweise könnte der erste Armteil an dem Basisbauteil um einen Winkelbereich von mindestens 225°, insbesondere von mindestens 270°, vorteilhaft von mindestens 310°, besonders vorteilhaft von mindestens 350° und vorzugsweise von mindestens 360° rotierbar, insbesondere schwenkbar, um die Rotationsachse gelagert sein, wobei der erste Armteil an dem Basisbauteil insbesondere beliebig oft um einen Winkelbereich von mindestens 360° rotierbar gelagert und vorteilhaft dauerhaft drehbar angeordnet sein könnte. Vorteilhaft ist der erste Armteil an dem Basisbauteil jedoch um maximal 360°, insbesondere um maximal 315°, vorteilhaft um maximal 270°, besonders vorteilhaft um maximal 230° und vorzugsweise um maximal 190° rotierbar, insbesondere schwenkbar, um die Rotationsachse gelagert. Dadurch kann der erste Armteil insbesondere flexibel relativ zu dem Basisbauteil gelagert werden.

Zudem wird vorgeschlagen, dass die Kochfeldvorrichtung einen insbesondere elektrischen ersten Motor umfasst, der dazu vorgesehen ist, den ersten Armteil relativ zu dem Basisbauteil insbesondere um die Rotationsachse zu bewegen. Unter einem "Motor" soll insbesondere eine Baueinheit verstanden werden, das dazu vorgesehen ist, eine Energieform, wie beispielsweise thermische Energie und/oder elektrische Energie und/oder chemische Energie, in Bewegungsenergie umzuwandeln. Dadurch kann insbesondere eine hohe Funktionstüchtigkeit und/oder eine hohe Beweglichkeit bereitgestellt werden.

Weiterhin wird vorgeschlagen, dass der zweite Armteil um einen Winkelbereich von mindestens 270°, insbesondere von mindestens 300°, vorteilhaft von mindestens 330° und besonders vorteilhaft von mindestens 350° rotierbar insbesondere um eine Schwenkachse an dem ersten Armteil gelagert ist. Vorzugsweise ist das zweite Armteil um einen Winkelbereich von mindestens 360° rotierbar um die Schwenkachse an dem ersten Armteil gelagert, wobei das erste Armteil insbesondere beliebig oft nacheinander und vorteilhaft in dieselbe Richtung um einen Winkelbereich von mindestens 360° rotierbar um die Schwenkachse gelagert sein könnte. Hierbei könnte das zweite Armteil insbesondere dauerhaft drehbar, beispielsweise karussellartig, um die Schwenkachse an dem ersten Armteil gelagert sein. Dadurch kann insbesondere eine flexible Beheizung eines Gargeschirrs ermöglicht werden. Insbesondere kann das eine einzige Heizelement an einer Vielzahl unterschiedlicher Positionen angeordnet werden.

Ferner wird vorgeschlagen, dass die Kochfeldvorrichtung einen insbesondere elektrischen zweiten Motor umfasst, der dazu vorgesehen ist, den zweiten Armteil relativ zu dem ersten Armteil insbesondere um die Schwenkachse zu bewegen, wodurch insbesondere eine hohe Beweglichkeit erzielt werden kann.

Zudem wird vorgeschlagen, dass der erste Motor dazu vorgesehen ist, unmittelbar auf den ersten Armteil zu wirken. Unter der Wendung, dass ein Objekt dazu vorgesehen ist, "unmittelbar" auf ein weiteres Objekt zu wirken, soll insbesondere verstanden werden, dass das Objekt direkt auf das weitere Objekt wirkt, wobei sich das Objekt und das weitere Objekt insbesondere wenigstens teilweise berühren und/oder wobei insbesondere höchstens ein Kontaktelement zwischen dem Objekt und dem weiteren Objekt angeordnet ist, das das Objekt und das weitere Objekt wenigstens teilweise berührt und das vorteilhaft in wenigstens einer Querschnittsebene eine Ausdehnung, insbesondere eine Materialstärke und/oder Dicke aufweist, die insbesondere maximal einer Ausdehnung eines kleineren der beiden Objekte entspricht. Unter der Wendung, dass ein Objekt dazu vorgesehen ist, auf ein weiteres Objekt zu "wirken", soll insbesondere verstanden werden, dass das Objekt, vorteilhaft wenigstens ein Element des Objekts, eine Kraft auf das weitere Objekt ausübt, wobei das Objekt insbesondere zwei relativ zueinander bewegliche Elemente, wie insbesondere einen Stator und/oder einen Rotor aufweist, von denen zumindest ein Element die Kraft auf das weitere Objekt ausübt. Dadurch kann insbesondere ein kurzer Kraftweg erreicht werden.

In einer weiteren Ausgestaltung wird vorgeschlagen, dass der erste Motor dazu vorgesehen ist, mittelbar auf den ersten Armteil zu wirken. Unter der Wendung, dass ein Objekt dazu vorgesehen ist, "mittelbar" auf ein weiteres Objekt zu wirken, soll insbesondere verstanden werden, dass das Objekt über eine weitere Baueinheit auf das weitere Objekt wirkt, wobei die Baueinheit insbesondere zwischen dem Objekt und dem weiteren Objekt angeordnet ist und vorteilhaft wenigstens eine Kraft zwischen dem Objekt und dem weiteren Objekt überträgt. Dadurch kann insbesondere eine flexible Anordnung des ersten Motors relativ zu dem ersten Armteil ermöglicht werden.

Ferner wird vorgeschlagen, dass die Kochfeldvorrichtung ein erstes Getriebe umfasst, mittels dessen der erste Motor auf den ersten Armteil wirkt. Unter einem "Getriebe" soll insbesondere eine Einheit verstanden werden, die vorteilhaft dazu vorgesehen ist, zumindest eine Bewegungskenngröße, wie beispielsweise eine Richtung und/oder eine Beschleunigung und/oder eine Geschwindigkeit, und/oder zumindest ein Kraftmoment, wie beispielsweise eine Kraft und/oder ein Drehmoment, von einem Objekt zu einem weiteren Objekt zu übertragen und/oder die insbesondere dazu vorgesehen ist, die zumindest eine Bewegungskenngröße und/oder das zumindest eine Kraftmoment insbesondere im Zuge der Übertragung, zu verändern. Das Getriebe könnte insbesondere das zumindest eine Kraftmoment unverändert übertragen und das Bewegungsmoment, wie beispielsweise eine Rotationsgeschwindigkeit um eine Drehachse verändern, wobei das Getriebe hierbei vorteilhaft eine Übersetzung zwischen dem Objekt und dem weiteren Objekt verändern könnte. Dadurch kann insbesondere eine Kraftübersetzung und/oder eine Geschwindigkeitsübersetzung ermöglicht werden, wodurch insbesondere eine geringe Rotationsgeschwindigkeit erzielt werden.

Zudem wird vorgeschlagen, dass der zweite Motor dazu vorgesehen ist, unmittelbar auf den zweiten Armteil zu wirken, wodurch insbesondere eine geringe Anzahl möglicher Fehlerquellen ermöglicht und/oder eine kompakte Ausgestaltung bereitgestellt werden kann.

In einer weiteren Ausgestaltung wird vorgeschlagen, dass der zweite Motor dazu vorgesehen ist, mittelbar auf den zweiten Armteil zu wirken, wodurch insbesondere eine hohe Gestaltungsfreiheit hinsichtlich einer Anordnung von Bauteilen erreicht werden kann.

Ferner wird vorgeschlagen, dass die Kochfeldvorrichtung ein zweites Getriebe umfasst, mittels dessen der zweite Motor auf den zweiten Armteil wirkt, wodurch insbesondere durch eine Möglichkeit einer Kraftübersetzung und/oder einer Geschwindigkeitsübersetzung eine hohe Flexibilität erzielt werden kann.

Zudem wird vorgeschlagen, dass der erste Armteil einen Aufnahmebereich zu einer Lagerung des zweiten Armteils aufweist. Unter einem "Aufnahmebereich" des ersten Armteils soll insbesondere ein Bereich verstanden werden, der insbesondere von zumindest zwei Seiten durch den ersten Armteil begrenzt ist und in welchem vorteilhaft der zweite Armteil in wenigstens einer Stellung des zweiten Armteils relativ zu dem ersten Armteil wenigstens zu einem Großteil angeordnet ist. In der wenigstens einen Stellung ist insbesondere ein Massenanteil und/oder Volumenanteil des zweiten Armteils von mindestens 50 %, insbesondere von mindestens 70 %, vorteilhaft von mindestens 80 % und vorzugsweise von mindestens 90 % in dem Aufnahmebereich des ersten Armteils angeordnet. Vorteilhaft ist der Aufnahmebereich an einem der Aufhängung abgewandten Ende des ersten Armteils angeordnet und insbesondere dazu vorgesehen, eine freie Rotation des zweite Armteils relativ zu dem ersten Armteil um den Winkelbereich von mindestens 270° insbesondere um die Schwenkachse zu ermöglichen. Dadurch kann insbesondere eine freie Schwenkbarkeit des zweiten Armteils relativ zu dem ersten Armteil erreicht werden.

Die Kochfeldvorrichtung soll hierbei nicht auf die oben beschriebene Anwendung und Ausführungsform beschränkt sein. Insbesondere kann die Kochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldvorrichtung in einer schematischen Draufsicht,
- Fig. 2: einen Ausschnitt des Kochfelds mit der Kochfeldvorrichtung in einer schematischen Draufsicht, wobei eine Kochfeldplatte nicht dargestellt ist,
- Fig. 3: einen Ausschnitt der Kochfeldvorrichtung in einer schematischen Seitenansicht und
- Fig. 4: einen Ausschnitt einer alternativen Kochfeldvorrichtung eines alternativen Kochfelds in einer schematischen Seitenansicht.

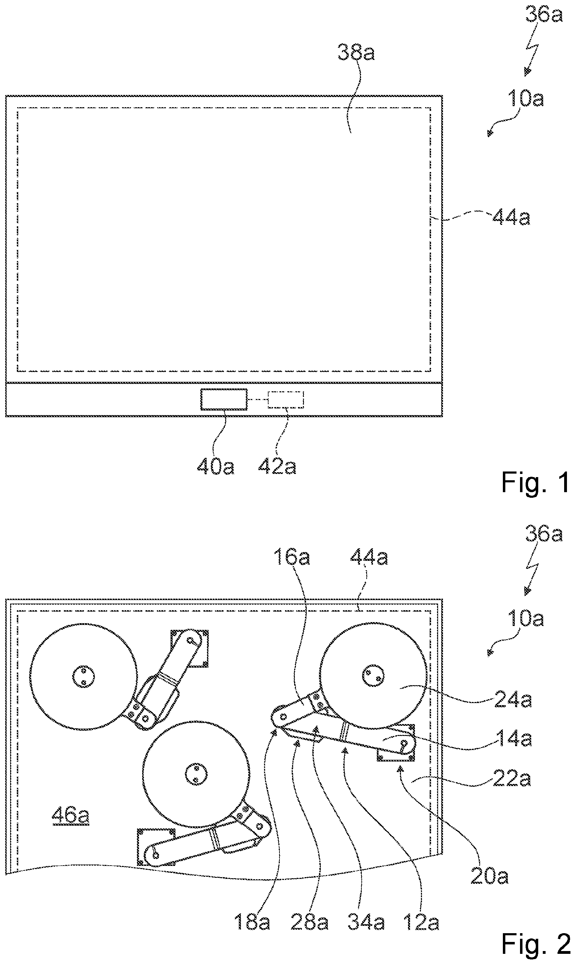

Fig. 1 zeigt ein Kochfeld 36, das als Induktionskochfeld ausgebildet ist, mit einer Kochfeldvorrichtung 10, die als Induktionskochfeldvorrichtung ausgebildet ist. Die Kochfeldvorrichtung 10 umfasst eine Kochfeldplatte 38. Die Kochfeldplatte 38 ist zu einem Aufstellen von Gargeschirr vorgesehen. In einem montierten Zustand bildet die Kochfeldplatte 38 einen Teil eines Außengehäuses aus, und zwar insbesondere eines Außengehäuses des Kochfelds 36.

Die Kochfeldvorrichtung 10 umfasst mehrere Heizelemente 24 (vgl. Fig. 2). Im vorliegenden Ausführungsbeispiel umfasst die Kochfeldvorrichtung 10 drei Heizelemente 24. Alternativ könnte die Kochfeldvorrichtung weniger Heizelemente aufweisen, wie beispielsweise genau ein Heizelement oder zwei Heizelemente. Die Kochfeldvorrichtung könnte in einer alternativen Ausgestaltung zumindest vier und insbesondere zumindest fünf Heizelemente umfassen. Die Heizelemente 24 sind beweglich angeordnet. Die Heizelemente 24 definieren einen variablen Kochflächenbereich 44. Der variable Kochflächenbereich 44 erstreckt sich über einen Großteil einer Flächenerstreckung der Kochfeldplatte 38. Hierbei erstreckt sich der variable Kochflächenbereich 44 über mindestens 60 %, insbesondere über mindestens 70 %, vorteilhaft über mindestens 75 % und vorzugsweise über mindestens 80 % einer Flächenerstreckung der Kochfeldplatte 38. Im Folgenden wird lediglich eines der Heizelemente 24 beschrieben. Das Heizelement 24 ist dazu vorgesehen, auf der Kochfeldplatte 38 aufgestelltes Gargeschirr zu erhitzen.

Die Kochfeldvorrichtung 10 umfasst eine Bedieneinheit 40 zu einer Eingabe und/oder Auswahl von Betriebsparametern (vgl. Fig. 1), beispielsweise einer Heizleistung und/oder einer Heizleistungsdichte und/oder einer Heizzone. Die Bedieneinheit 40 ist zu einer Ausgabe eines Werts eines Betriebsparameters an einen Bediener vorgesehen.

Die Kochfeldvorrichtung 10 umfasst eine Steuereinheit 42. Die Steuereinheit 42 ist dazu vorgesehen, in Abhängigkeit von mittels der Bedieneinheit 40 eingegebener Betriebsparameter Aktionen auszuführen und/oder Einstellungen zu verändern. Die Steuereinheit 42 regelt in einem Heizbetriebszustand eine Energiezufuhr zu dem Heizelement 24. Zu einer Versorgung von elektrischen Komponenten, wie beispielsweise des Heizelements 24 und/oder der Steuereinheit 42, umfasst die Kochfeldvorrichtung 10 eine Versorgungseinheit (nicht dargestellt). Die Steuereinheit 42 steuert in dem Heizbetriebszustand die Leistungsversorgung an, um das aktivierte Heizelement 24 mit elektrischem Strom zu versorgen.

Das Heizelement 24 ist beweglich angeordnet. In Abhängigkeit von einer Position eines aufgestellten Gargeschirrs bewegt die Steuereinheit 42 das Heizelement 24 in einem Betriebszustand an die Position des Gargeschirrs. Die Steuereinheit 42a bewegt in dem Betriebszustand das Heizelement 24a in einer Ebene, die im Wesentlichen parallel zu einer Haupterstreckungsebene der Kochfeldplatte 38a ausgerichtet ist. In dem Betriebszustand ist das Heizelement 24a durch die Steuereinheit 42 in zwei Freiheitsgraden bewegbar.

Das Heizelement 24 ist dazu vorgesehen, mehrere Gargeschirre simultan zu beheizen. Beispielsweise sei ein Fall von zwei aufgestellten Gargeschirren angenommen. Im Fall von zwei aufgestellten Gargeschirren ermittelt die Steuereinheit 42 eine Frequenz zu einer Bewegung des Heizelements 24 zwischen einer Position eines ersten Gargeschirrs und einer Position eines zweiten Gargeschirrs. Eine Beheizung von zwei oder mehr Gargeschirren mit einem Heizelement 24 ist bereits Stand der Technik und nicht Kern dieser Erfindung. Daher wird hierauf im Folgenden nicht weiter eingegangen.

Die Kochfeldvorrichtung 10 umfasst ein Basisbauteil 22 (vgl. Fig. 2). Das Basisbauteil 22 ist als ein Gehäusebauteil ausgebildet. Gemeinsam mit der Kochfeldplatte 38 bildet das Basisbauteil 22 das Außengehäuse aus. Beispielsweise könnte das Basisbauteil mehrere Elemente aufweisen, die insbesondere miteinander verbunden sein und vorteilhaft gemeinsam das Gehäusebauteil ausbilden könnten. Das Basisbauteil 22 ist im vorliegenden Ausführungsbeispiel einstückig ausgebildet. Das Basisbauteil 22 weist einen Boden auf. Das Basisbauteil 22a weist Seitenwände auf. In dem montierten Zustand bildet das Basisbauteil 22 einen einem Bediener abgewandten Teil des Außengehäuses aus. Das Basisbauteil 22 ist zu einer Lagerung von Komponenten vorgesehen, insbesondere von Komponenten des Kochfelds 36 und/oder der Kochfeldvorrichtung 10. Gemeinsam mit der Kochfeldplatte 38 definiert das Basisbauteil 22 in dem montierten Zustand einen Innenraum 46 zu der Lagerung der Komponenten. In dem montierten Zustand sind die Steuereinheit 42, die Bedieneinheit 40 und das Heizelement 24 in dem Innenraum 46 angeordnet.

Das Heizelement 24 ist in dem montierten Zustand mit dem Basisbauteil 22 verbunden. Die Kochfeldvorrichtung 10 umfasst einen Gelenkarm 12. Der Gelenkarm 12 verbindet in dem montierten Zustand das Basisbauteil 22 und das Heizelement 24 miteinander. Der Gelenkarm 12 trägt in dem montierten Zustand das Heizelement 24. Hierbei trägt der Gelenkarm 12a in dem montierten Zustand genau ein einziges Heizelement 24a. In dem Betriebszustand lagert der Gelenkarm 12 das Heizelement 24 beweglich relativ zu dem Basisbauteil 22. Der Gelenkarm 12 weist einen ersten Armteil 14 und einen zweiten Armteil 16 auf. Der erste Armteil 14 und der zweite Armteil 16 sind relativ zueinander beweglich angeordnet. Die Kochfeldvorrichtung 10 umfasst ein Gelenk 18. Das Gelenk 18 lagert den zweiten Armteil 16 relativ zu dem ersten Armteil 14 beweglich. Das Gelenk 18a koppelt den ersten Armteil 14a an den zweiten Armteil 16a.

Zu einer Anbindung des ersten Armteils 14 an das Basisbauteil 22 umfasst die Kochfeldvorrichtung 10 eine Aufhängung 20. Die Aufhängung 20 befestigt in dem montierten Zustand den Gelenkarm 12 an dem Basisbauteil 22. In dem montierten Zustand befestigt die Aufhängung 20 das erste Armteil 14 an dem Basisbauteil 22. Der Gelenkarm 12 und die Aufhängung 20 sind als voneinander verschiedene Einheiten ausgebildet. Die Aufhängung 20 bindet in dem montierten Zustand den Gelenkarm 12 an dem Boden des Basisbauteils 22 an. Die Aufhängung 20 lagert in dem montierten Zustand einen Großteil des Gelenkarms 12 beabstandet zu dem Basisbauteil 22.

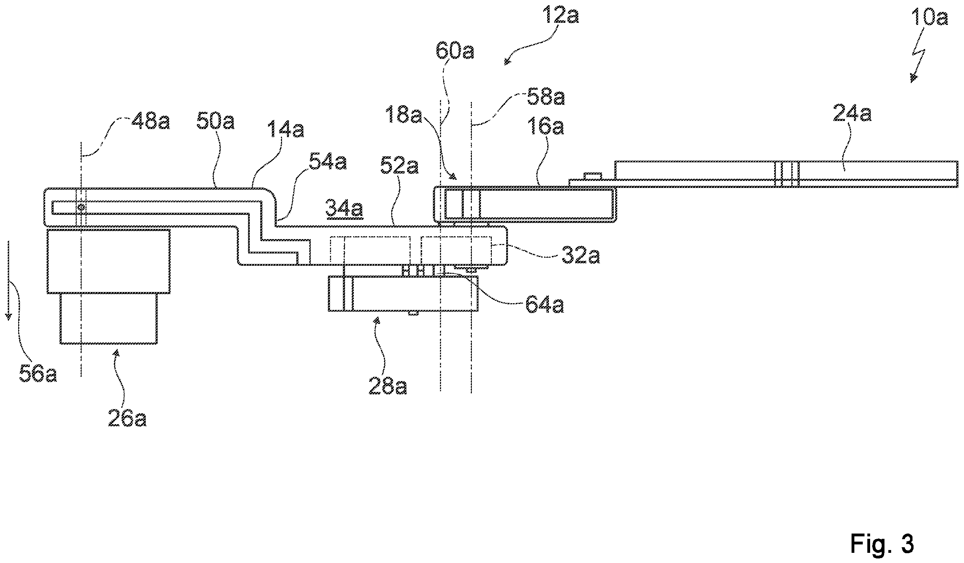

Der erste Armteil 14 ist beweglich relativ zu dem Basisbauteil 22 angeordnet. Hierbei ist der erste Armteil 14 um einen Winkelbereich von im Wesentlichen 180° rotierbar an dem Basisbauteil 22 gelagert. Die Kochfeldvorrichtung 10 umfasst einen ersten Motor 26, der den ersten Armteil 14 beweglich relativ zu dem Basisbauteil 22 lagert (vgl. Fig. 3). Der erste Motor 26 ist als ein Elektromotor ausgebildet. Der erste Motor 26 lagert in dem montierten Zustand den ersten Armteil 14 um eine Rotationsachse 48 rotierbar relativ zu dem Basisbauteil 22.

Im vorliegenden Ausführungsbeispiel wirkt der erste Motor 26 in dem montierten Zustand unmittelbar auf den ersten Armteil 14. Der erste Motor 26 und der erste Armteil 14 berühren sich in dem montierten Zustand teilweise. Eine Übertragung von Momenten, wie beispielsweise von Kraftmomenten und/oder von Bewegungsmomenten, erfolgt in dem Betriebszustand direkt zwischen dem ersten Motor 26 und dem ersten Armteil 14. In dem montierten Zustand ist der erste Motor 26 zwischen dem ersten Armteil 14 und dem Basisbauteil 22 angeordnet. Der erste Motor 26 ist an einem dem zweiten Armteil 16 abgewandten Ende des ersten Armteils 14 angeordnet.

Der erste Armteil 14 weist einen ersten Teilbereich 50 und einen zweiten Teilbereich 52 auf. Der erste Teilbereich 50 bildet einen in dem montierten Zustand dem zweiten Armteil 16 abgewandten Teil des ersten Armteils 14 aus. Der zweite Teilbereich 52 bildet einen in dem montierten Zustand dem zweiten Armteil 16 zugewandten Teil des ersten Armteils 14 aus. Der erste Armteil 14 weist einen dritten Teilbereich 54 auf. Der dritte Teilbereich 54 verbindet den ersten Teilbereich 50 und den zweiten Teilbereich 52 miteinander. Die Teilbereiche 50, 52, 54 sind unbeweglich relativ zueinander angeordnet. Die Teilbereiche 50, 52, 54 sind starr miteinander verbunden. Im vorliegenden Ausführungsbeispiel sind die Teilbereiche 50, 52, 54 einstückig miteinander ausgebildet. Der dritte Teilbereich 54 ist im Wesentlichen senkrecht zu dem ersten Teilbereich 50 und zu dem zweiten Teilbereich 52 ausgerichtet. Der erste Teilbereich 50 weist einen in dem montierten Zustand einen größeren Abstand zu dem Boden des Basisbauteils 22 auf als der zweite Teilbereich 52. Der Abstand ist hierbei im Wesentlichen parallel zu einer Vertikalrichtung 56 ausgerichtet. Die Vertikalrichtung 56 ist in dem montierten Zustand im Wesentlichen senkrecht zu einer Haupterstreckungsebene des Basisbauteils 22 ausgerichtet. In dem montierten Zustand ist die Vertikalrichtung 56 im Wesentlichen senkrecht zu einer Haupterstreckungsebene der Kochfeldplatte 38 ausgerichtet. In einer Einbaulage ist die Vertikalrichtung 56 im Wesentlichen parallel zu einer Schwerkraftrichtung ausgerichtet. Die Vertikalrichtung 56 weist in dem montierten Zustand von der Kochfeldplatte 38 in Richtung des Basisbauteils 22 auf. Der erste Armteil 14 weist bei Betrachtung in einer Seitenansicht eine treppenförmige Gestalt auf.

Eine Haupterstreckungsrichtung des ersten Teilbereichs 50 und eine Haupterstreckungsrichtung des zweiten Teilbereichs 52 sind in dem montierten Zustand im Wesentlichen parallel zueinander ausgerichtet. Die Haupterstreckungsrichtung des ersten Teilbereichs 50 und die Haupterstreckungsrichtung des zweiten Teilbereichs 52 definieren eine Haupterstreckungsrichtung des ersten Armteils 14. Die Haupterstreckungsrichtung des ersten Armteils 14 ist in dem montierten Zustand im Wesentlichen parallel zu der Haupterstreckungsebene des Basisbauteils 22 ausgerichtet. Eine Haupterstreckungsrichtung des zweiten Armteils 16 und die Haupterstreckungsebene des Basisbauteils 22 sind in dem montierten Zustand im Wesentlichen parallel zueinander angeordnet. Eine Haupterstreckungsebene einer Baueinheit ist insbesondere eine Ebene, welche parallel zu einer größten Seitenfläche eines kleinsten geometrischen Quaders ist, welcher die Baueinheit gerade noch vollständig umschließt. Hierbei verläuft die Haupterstreckungsebene insbesondere durch den Mittelpunkt des Quaders.

Der zweite Armteil 16 ist in dem montierten Zustand in einem Bereich des zweiten Teilbereichs 54 des ersten Armteils 14 an dem ersten Armteil 14 angeordnet. Hierbei ist der zweite Armteil 16 in dem montierten Zustand um einen Winkelbereich von mindestens 360° rotierbar an dem ersten Armteil 14 gelagert. Der zweite Armteil 16 ist in dem montierten Zustand beliebig oft um 360° relativ zu dem ersten Armteil 14 rotierbar angeordnet. In dem montierten Zustand ist der zweite Armteil 16 auf einer dem Basisbauteil 22, insbesondere dem Boden des Basisbauteils 22, abgewandten Seite des ersten Armteils 14 angeordnet. Das erste Armteil 14 weist einen Aufnahmebereich 34 zu einer Lagerung des zweiten Armteils 16 auf.

Der Aufnahmebereich 34 ist in dem montierten Zustand in der Vertikalrichtung 56 durch den zweiten Teilbereich 52 des ersten Armteils 14 begrenzt. In einer von dem zweiten Armteil 16 in Richtung des ersten Teilbereichs 50 weisenden Richtung ist der Aufnahmebereich 34 in dem montierten Zustand durch den ersten Teilbereich 50 begrenzt. Zusätzlich ist der Aufnahmebereich 34 in dem montierten Zustand in der von dem zweiten Armteil 16 in Richtung des ersten Teilbereichs 50 weisenden Richtung durch den dritten Teilbereich 54 begrenzt. Der Aufnahmebereich 34 ermöglicht in dem montierten Zustand eine freie Drehbarkeit des zweiten Armteils 16 relativ zu dem ersten Armteil 14.

Die Kochfeldvorrichtung 10a umfasst einen zweiten Motor 28a. Der erste Motor 26a und der zweite Motor 28a sind voneinander unabhängig. Der zweite Motor 28a bewegt in dem Betriebszustand den zweiten Armteil 16a relativ zu dem ersten Armteil 14a. Beispielsweise könnte der zweite Motor als ein Linearmotor ausgebildet und dazu vorgesehen sein, das zweite Armteil insbesondere translatorisch relativ dem ersten Armteil zu lagern. Im vorliegenden Ausführungsbeispiel ist der zweite Motor 28a dazu vorgesehen, das zweite Armteil 16a rotierbar, insbesondere schwenkbar, um eine Schwenkachse 58a relativ zu dem ersten Armteil zu 14a lagern. In dem Betriebszustand rotiert der zweite Motor 28a den zweiten Armteil 16a um eine Schwenkachse 58a.

Der zweite Motor 28a wirkt in dem Betriebszustand mittelbar auf den zweiten Armteil 16a. Beispielsweise könnte ein Koppelelement zwischen dem zweiten Motor und dem zweiten Armteil angeordnet sein. Die Kochfeldvorrichtung könnte hierbei insbesondere das Koppelelement umfassen. Das Koppelelement könnte insbesondere den zweiten Motor und den zweiten Armteil miteinander verbinden. Der zweite Motor könnte insbesondere ein Kraftmoment und/oder ein Bewegungsmoment auf das Koppelelement ausüben. Das Koppelelement könnte das Kraftmoment und/oder das Bewegungsmoment vorteilhaft an den zweiten Armteil übertragen. Beispielsweise könnte das Koppelelement als ein Band und/oder als eine Kette und/oder als ein Riemen und/oder als ein Gürtel ausgebildet sein. Im vorliegenden Ausführungsbeispiel umfasst die Kochfeldvorrichtung 10 ein zweites Getriebe 32a. Der zweite Motor 28 wirkt in dem Betriebszustand mittels des zweiten Getriebes 32a auf den zweiten Armteil 16a.

Der zweite Motor 28a weist ein zweites Motorelement 64a auf. Das zweite Motorelement 64a rotiert in dem Betriebszustand um eine weitere Schwenkachse 60a. In dem montierten Zustand ist das zweite Motorelement 64a an das zweite Getriebe 32a gekoppelt. Der zweite Motor 28a überträgt in dem Betriebszustand insbesondere mittels des zweiten Motorelements 64a Momente, wie insbesondere ein Kraftmoment und/oder ein Bewegungsmoment, auf das zweite Getriebe 32a. In dem Betriebszustand wirkt der zweite Motor 28a unmittelbar auf das zweite Getriebe 32a. Das zweite Getriebe 32a wirkt in dem Betriebszustand unmittelbar auf den zweiten Armteil 16a.

Der zweite Motor 28a ist in dem montierten Zustand an dem ersten Armteil 14a angeordnet. In dem montierten Zustand ist der zweite Motor 28a auf einer dem Boden des Basisbauteils 22a zugewandten Seite des ersten Armteils 14a angeordnet. Der zweite Motor 28a wirkt in dem Betriebszustand durch den ersten Armteil 14a hindurch auf den zweiten Armteil 16. Das zweite Getriebe 32a ist innerhalb des ersten Armteils 14a angeordnet. Der erste Armteil 14a bildet einen Innenraum aus, in welchem das zweite Getriebe 32a angeordnet ist. Der zweite Motor 28a greift insbesondere mittels des zweiten Motorelements 62a teilweise in den Innenraum des ersten Armteils 14a ein.

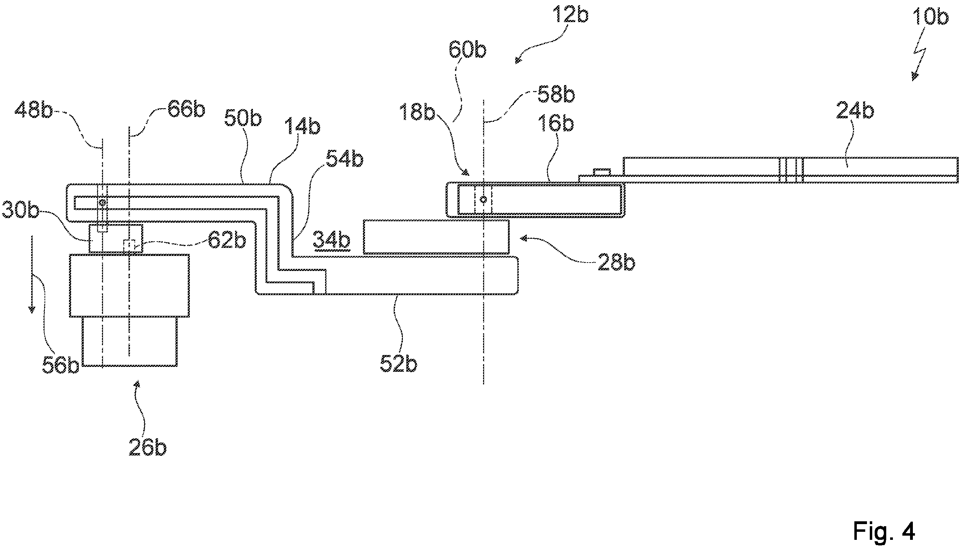

In Fig. 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 3 verwiesen werden kann. Zur Unterscheidung der Ausführungsbeispiele ist der Buchstabe a in den Bezugszeichen des Ausführungsbeispiels in den Fig. 1 bis 3 durch den Buchstaben b in den Bezugszeichen des Ausführungsbeispiels der Fig. 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 3 verwiesen werden.

Fig. 4 zeigt einen Ausschnitt einer Kochfeldvorrichtung 10b eines Kochfelds 36b. Die Kochfeldvorrichtung 10b umfasst einen Gelenkarm 12b, der einen ersten Armteil 14b und einen zweiten Armteil 16b aufweist, und ein Gelenk 18b, das den zweiten Armteil 16b in einem montierten Zustand relativ zu dem ersten Armteil 14b beweglich lagert. Der Gelenkarm 18b trägt in dem montierten Zustand genau ein Heizelement 24b. Der erste Armteil 16b ist in dem montierten Zustand durch eine Aufhängung 20b an ein Basisbauteil 22b angebunden.

Ein erster Motor 26b wirkt in einem Betriebszustand mittelbar auf den ersten Armteil 14b. Insbesondere könnte ein Koppelelement zwischen dem ersten Motor und dem ersten Armteil angeordnet sein. Die Kochfeldvorrichtung könnte hierbei insbesondere das Koppelelement umfassen. Das Koppelelement könnte insbesondere den ersten Motor und den ersten Armteil miteinander verbinden. Der erste Motor könnte insbesondere ein Kraftmoment und/oder ein Bewegungsmoment auf das Koppelelement ausüben. Das Koppelelement könnte das Kraftmoment und/oder das Bewegungsmoment vorteilhaft an den ersten Armteil übertragen. Beispielsweise könnte das Koppelelement als ein Band und/oder als eine Kette und/oder als ein Riemen und/oder als ein Gürtel ausgebildet sein.

Im vorliegenden Ausführungsbeispiel umfasst die Kochfeldvorrichtung 10 ein erstes Getriebe 32b, mittels dessen der erste Motor 26b in dem Betriebszustand auf den ersten Armteil 14b wirkt. Der erste Motor 26b weist ein erstes Motorelement 62b auf. Das erste Motorelement 62b rotiert in dem Betriebszustand um eine weitere Rotationsachse 66b. In dem montierten Zustand ist das erste Motorelement 62b an das erste Getriebe 30b gekoppelt. Der erste Motor 28b überträgt in dem Betriebszustand insbesondere mittels des ersten Motorelements 64b Momente, wie beispielsweise ein Kraftmoment und/oder ein Bewegungsmoment, auf das erste Getriebe 30b. In dem Betriebszustand wirkt der erste Motor 26b unmittelbar auf das erste Getriebe 30b. Das erste Getriebe 30b wirkt in dem Betriebszustand unmittelbar auf den ersten Armteil 16b.

Die Kochfeldvorrichtung 10b umfasst einen zweiten Motor 28b. Der zweite Motor 28b wirkt in dem Betriebszustand unmittelbar auf den zweiten Armteil 16b. Der zweite Motor 28b und der zweite Armteil 16b berühren sich in dem montierten Zustand teilweise. Eine Übertragung von Momenten, wie beispielsweise von Kraftmomenten und/oder von Bewegungsmomenten, erfolgt in dem Betriebszustand direkt zwischen dem zweiten Motor 28b und dem zweiten Armteil 16b. In dem montierten Zustand ist der zweite Motor 28b in einem Aufnahmebereich 34b des ersten Armteils 14b angeordnet. Der zweite Motor 28b ist in dem montierten Zustand auf einer einem Boden des Basisbauteils 22b abgewandten Seite des ersten Armteils 14b angeordnet. Der erste Armteil 14b trägt in dem montierten Zustand den zweiten Motor 28b. Der zweite Motor 28b ist einem der Aufhängung 20b abgewandten Ende des ersten Armteils 14b angeordnet

### Bezugszeichen

- 10: Kochfeldvorrichtung
- 12: Gelenkarm
- 14: Erster Armteil
- 16: Zweiter Armteil
- 18: Gelenk
- 20: Aufhängung
- 22: Basisbauteil
- 24: Heizelement
- 26: Erster Motor
- 28: Zweiter Motor
- 30: Erstes Getriebe
- 32: Zweites Getriebe
- 34: Aufnahmebereich
- 36: Kochfeld
- 38: Kochfeldplatte
- 40: Bedieneinheit
- 42: Steuereinheit
- 44: Variabler Kochflächenbereich
- 46: Innenraum
- 48: Rotationsachse
- 50: Erster Teilbereich
- 52: Zweiter Teilbereich
- 54: Dritter Teilbereich
- 56: Vertikalrichtung
- 58: Schwenkachse
- 60: Weitere Schwenkachse
- 62: Erstes Motorelement
- 64: Zweites Motorelement
- 66: Weitere Rotationsachse

## Patentansprüche

1. Kochfeldvorrichtung, insbesondere Induktionskochfeldvorrichtung, mit zumindest einem Heizelement (24a-b), mit einem Gelenkarm (12a-b), der einen ersten Armteil (14a-b) und einen zweiten Armteil (16a-b) aufweist, mit einem Gelenk (18a-b), das dazu vorgesehen ist, den zweiten Armteil (16a-b) relativ zu dem ersten Armteil (14a-b) beweglich zu lagern, und mit einer Aufhängung (20a-b) zu einer Anbindung des ersten Armteils (14a-b) an ein Basisbauteil (22a-b), **dadurch gekennzeichnet, dass** der Gelenkarm (12a-b), welcher genau zwei Armteile aufweist, dazu vorgesehen ist, genau ein Heizelement (24a-b), und zwar das zumindest eine Heizelement (24a-b), zu tragen, und in einem montierten Zustand das genau eine einzige Heizelement (24a-b) trägt.

2. Kochfeldvorrichtung nach Anspruch 1, **gekennzeichnet durch** das Basisbauteil (22a-b), an dem der erste Armteil (14a-b) um einen Winkelbereich von mindestens 90° rotierbar gelagert ist.

3. Kochfeldvorrichtung nach Anspruch 2, **gekennzeichnet durch** einen ersten Motor (26a-b), der dazu vorgesehen ist, den ersten Armteil (14a-b) relativ zu dem Basisbauteil (22a-b) zu bewegen.

4. Kochfeldvorrichtung nach einem der vorhergehenden Ansprüche, **dadurch gekennzeichnet, dass** der zweite Armteil (16a-b) um einen Winkelbereich von mindestens 270° rotierbar an dem ersten Armteil (14a-b) gelagert ist.

5. Kochfeldvorrichtung nach Anspruch 4, **gekennzeichnet durch** einen zweiten Motor (28a-b), der dazu vorgesehen ist, den zweiten Armteil (16a-b) relativ zu dem ersten Armteil (14a-b) zu bewegen.

6. Kochfeldvorrichtung nach Anspruch 3, **dadurch gekennzeichnet, dass** der erste Motor (26a) dazu vorgesehen ist, unmittelbar auf den ersten Armteil (14a) zu wirken.

7. Kochfeldvorrichtung nach Anspruch 3, **dadurch gekennzeichnet, dass** der erste Motor (26b) dazu vorgesehen ist, mittelbar auf den ersten Armteil (14b) zu wirken.

8. Kochfeldvorrichtung nach Anspruch 7, **gekennzeichnet durch** ein erstes Getriebe (30b), mittels dessen der erste Motor (26b) auf den ersten Armteil (14b) wirkt.

9. Kochfeldvorrichtung nach Anspruch 5, **dadurch gekennzeichnet, dass** der zweite Motor (28b) dazu vorgesehen ist, unmittelbar auf den zweiten Armteil (16b) zu wirken.

10. Kochfeldvorrichtung nach Anspruch 5, **dadurch gekennzeichnet, dass** der zweite Motor (28a) dazu vorgesehen ist, mittelbar auf den zweiten Armteil (16a) zu wirken.

11. Kochfeldvorrichtung nach Anspruch 10, **gekennzeichnet durch** ein zweites Getriebe (32a), mittels dessen der zweite Motor (28a) auf den zweiten Armteil (16a) wirkt.

12. Kochfeldvorrichtung nach einem der vorhergehenden Ansprüche, **dadurch gekennzeichnet, dass** der erste Armteil (14a-b) einen Aufnahmebereich (34a-b) zu einer Lagerung des zweiten Armteils (16a-b) aufweist.

13. Kochfeld, insbesondere Induktionskochfeld, mit zumindest einer Kochfeldvorrichtung (10a-b) nach einem der vorhergehenden Ansprüche.

## Claims

1. Cooktop device, in particular induction cooktop device, having at least one heating element (24a-b), with an articulated arm (12a-b) which has a first arm part (14a-b) and a second arm part (16a-b), a joint (18a-b) which is designed to support the second arm part (16a-b) in such a way that said second arm part (16a-b) can be moved relative to the first arm part (14a-b), and a suspension (20a-b) for connecting the first arm part (14a-b) to a base component (22a-b), **characterised in that** the articulated arm (12a-b), which has exactly two arm parts, is designed to bear exactly one heating element (24a-b), namely the at least one heating element (24a-b), and in a mounted state bears the exactly one single heating element (24a-b).

2. Cooktop device according to claim 1, **characterised by** the base component (22a-b), on which the first arm part (14a-b) is so supported as to be rotatable through an angular range of at least 90°.

3. Cooktop device according to claim 2, **characterised by** a first motor (26a-b), which is designed to move the first arm part (14a-b) relative to the base component (22a-b).

4. Cooktop device according to one of the preceding claims, **characterised in that** the second arm part (16a-b) is so supported on the first arm part (14a-b) as to be rotatable through an angular range of at least 270°.

5. Cooktop device according to claim 4, **characterised by** a second motor (28a-b), which is designed to move the second arm part (16a-b) relative to the first arm part (14a-b).

6. Cooktop device according to claim 3, **characterised in that** the first motor (26a) is designed to act directly on the first arm part (14a).

7. Cooktop device according to claim 3, **characterised in that** the first motor (26b) is designed to act indirectly on the first arm part (14b).

8. Cooktop device according to claim 7, **characterised by** a first transmission (30b), by means of which the first motor (26b) acts on the first arm part (14b).

9. Cooktop device according to claim 5, **characterised in that** the second motor (28b) is designed to act directly on the second arm part (16b).

10. Cooktop device according to claim 5, **characterised in that** the second motor (28a) is designed to act indirectly on the second arm part (16a).

11. Cooktop device according to claim 10, **characterised by** a second transmission (32a), by means of which the second motor (28a) acts on the second arm part (16a).

12. Cooktop device according to one of the preceding claims, **characterised in that** the first arm part (14a-b) has a locating region (34a-b) for supporting the second arm part (16a-b).

13. Cooktop, in particular induction cooktop, comprising at least one cooktop device (10a-b) according to one of the preceding claims.

## Revendications

1. Dispositif à table de cuisson, en particulier dispositif à table de cuisson à induction, avec au moins un élément chauffant (24a-b), avec un bras articulé (12a-b) qui présente une première partie de bras (14a-b) et une seconde partie de bras (16a-b), avec une articulation (18a-b) qui est prévue pour loger de manière mobile la seconde partie de bras (16a-b) par rapport à la première partie de bras (14a-b), et avec une suspension (20a-b) à une liaison de la première partie de bras (14a-b) au niveau d'un composant de base (22a-b), **caractérisé en ce que** le bras articulé (12a-b), lequel présente exactement deux parties de bras, est prévu pour porter un élément chauffant (24a-b), à savoir l'au moins un élément chauffant (24a-b), et porte dans un état monté l'exactement un seul élément chauffant (24a-b).

2. Dispositif à table de cuisson selon la revendication 1, **caractérisé par** le composant de base (22a-b) au niveau duquel est logé de manière rotative la première partie de bras (14a-b) à une plage angulaire d'au moins 90°.

3. Dispositif à table de cuisson selon la revendication 2, **caractérisé par** un premier moteur (26a-b) qui est prévu pour déplacer la première partie de bras (14a-b) par rapport au composant de base (22a-b).

4. Dispositif à table de cuisson selon l'une des revendications précédentes, **caractérisé en ce que** la seconde partie de bras (16a-b) est logée de manière rotative au niveau de la première partie de bras (14a-b) à une plage angulaire d'au moins 270°.

5. Dispositif à table de cuisson selon la revendication 4, **caractérisé par** un second moteur (28a-b) qui est prévu pour déplacer la seconde partie de bras (16a-b) par rapport à la première partie de bras (14a-b).

6. Dispositif à table de cuisson selon la revendication 3, **caractérisé en ce que** le premier moteur (26a) est prévu pour avoir un effet directement sur la première partie de bras (14a).

7. Dispositif à table de cuisson selon la revendication 3, **caractérisé en ce que** le premier moteur (26b) est prévu pour avoir un effet indirectement sur la première partie de bras (14b).

8. Dispositif à table de cuisson selon la revendication 7, **caractérisé par** un premier engrenage (30b) au moyen duquel le premier moteur (26b) a un effet sur la première partie de bras (14b).

9. Dispositif à table de cuisson selon la revendication 5, **caractérisé en ce que** le second moteur (28b) est prévu pour avoir un effet directement sur la seconde partie de bras (16b).

10. Dispositif à table de cuisson selon la revendication 5, **caractérisé en ce que** le second moteur (28a) est prévu pour avoir un effet indirectement sur la seconde partie de bras (16a).

11. Dispositif à table de cuisson selon la revendication 10, **caractérisé par** un second engrenage (32a) au moyen duquel le second moteur (28a) a un effet sur la seconde partie de bras (16a).

12. Dispositif à table de cuisson selon l'une des revendications précédentes, **caractérisé en ce que** la première partie de bras (14a-b) présente une zone de réception (34a-b) par rapport à un logement de la seconde partie de bras (16a-b).

13. Table de cuisson, en particulier table de cuisson à induction, avec au moins un dispositif à table de cuisson (10a-b) selon l'une des revendications précédentes.
